# EUROPEAN PATENT APPLICATION

(11) **EP 4 748 593 A1**
(43) Date of publication of application: **27.05.2026**
(21) Application number: 25216327.4
(22) Date of filing: 17.11.2025
(51) Int. Cl.: B60C 23/04

(54) **REAL TIME TIRE PRESSURE MONITORING SYSTEM AND METHOD**

(30) Priority: 25.11.2024 US 202463724677 P; 21.10.2025 US 202519364468
(71) Applicant: The Goodyear Tire & Rubber Company, Akron, OH 44316 (US)
(72) Inventor: SINGH, Kanwar Bharat, Akron, 44316 (US); SON, Roman, L-7750 Colmar-Berg (LU); HARIHARAN, Vishal, L-7750 Colmar-Berg (LU)
(74) Representative: Kutsch, Bernd

(57) **Abstract**

A real time tire pressure monitoring system and method is disclosed. It includes a sensor measuring a pressure of a first tire and a sensor measuring a pressure of a second tire. The measured pressures are transmitted from the sensors to a processor, and a fusion module is executed on the processor. The fusion module includes a filter module that receives the first tire pressure, determines a leak rate of the first tire, and generates a filter module flag when the leak rate falls below a predetermined leak threshold. The fusion module also includes a comparative module that receives the first and second tire measured pressures, compares the measured pressures, and generates a comparative module flag when a deviation exceeds a predetermined deviation threshold. The fusion module generates a system notification when both the filter module flag and the comparative module flag indicate a pressure leak.

## Description

### Field of the Invention

The invention relates generally to tire monitoring systems and methods. More particularly, the invention relates to systems and methods that monitor conditions in a tire, such as tire pressure. Specifically, the invention is directed to a tire pressure monitoring system and method that provides real-time tire pressure leak detection in multiple tires and a determination of leak rate.

### Background of the Invention

Vehicle tires, and particularly pneumatic tires, typically have certain conditions or parameters that are beneficial to monitor during vehicle operation. For example, monitoring the pressure of a pneumatic tire may be helpful in assessing the condition and/or performance of the tire, as a low pressure may indicate that there is an issue with the tire.

To monitor tire pressure, techniques have been developed to measure the pressure inside the tire cavity using sensors that are attached to the tire. Such techniques obtain pressure data from the sensors. In the event that the measured pressure is below a threshold value, a notification or alert may be generated.

However, many prior art systems do not operate in real time, which may result in a delay in sending a notification when the measured pressure is below a threshold value. Such a delay is undesirable, particularly when there may be a rapid air loss condition or event. In addition, many prior art systems only trigger a notification when the measured pressure is below a threshold value, rather than determining a leak rate, or loss of air pressure in the tire per unit time. Determination of a leak rate enables downward pressure trends to be detected, so that preventive steps may be taken before the measured pressure falls below a threshold value.

In addition, many prior art systems are capable of detecting and/or providing notification for an air leak in one tire at a time, which is undesirable if multiple tires have air leaks. Moreover, many prior art systems require a high degree of memory usage and/or have high computational requirements, which undesirably results in increased power requirements, cost, and/or complexity.

As a result, there is a need in the art for a tire pressure monitoring system that provides real-time tire pressure leak detection with a determination of leak rate, while detecting leaks in multiple tires, and which is capable of operating efficiently with low memory and computational requirements.

### Summary of the Invention

The invention relates to a system in accordance with claim 1 and to a method in accordance with claim 14.

Dependent claims refer to preferred embodiments of the invention.

According to an exemplary embodiment of the invention, a real time tire pressuring monitoring system and method for monitoring the pressure in a tire supporting a vehicle includes a first sensor mounted on a first tire for measuring a pressure of the first tire. A second sensor is mounted on a second tire for measuring a pressure of the second tire. Means are provided for transmitting the measured pressure data from the first sensor and the second sensor to a processor, and a fusion module is executed on the processor. The fusion module includes a filter module that receives the measured pressure for the first tire from the first sensor. The filter module includes a filter algorithm to determine a leak rate of the first tire and a filter module flag that is generated when the determined leak rate of the first tire falls below a predetermined leak threshold. The fusion module also includes a comparative module that receives the measured pressure for the first tire from the first sensor and the measured pressure for the second tire from the second sensor. The comparative module includes a peer comparator to compare the measured pressure for the first tire from the first sensor and the measured pressure for the second tire from the second sensor and determine a deviation, and a comparative module flag that is generated when the deviation exceeds a predetermined deviation threshold. The fusion module receives the filter module flag and the comparative module flag. A system notification is generated by the fusion module when both the filter module flag and the comparative module flag indicate a pressure leak. The system notification is transmitted to at least one of a vehicle control system and a display device for actuation of the vehicle in response to the system notification.

### Brief Description of the Drawings

The invention will be described by way of example and with reference to the accompanying drawings, in which:
Figure 1 is a schematic image of a vehicle and schematic perspective view of a tire that employ an exemplary embodiment of the real time tire pressure monitoring system of the present invention, showing the tire partially in section;
Figure 2 is a schematic plan view of the vehicle shown in Figure 1;
Figure 3 is a schematic perspective view of the vehicle shown in Figure 1 with a representation of data transmission to a cloud-based server and to a display device;
Figure 4 is a graphical representation showing aspects of an exemplary embodiment of the real time tire pressure monitoring system of the present invention;
Figure 5 is a flow diagram showing further aspects of the real time tire pressure monitoring system shown in Figure 4;
Figure 6 is a schematic representation showing further aspects of the real time tire pressure monitoring system shown in Figure 5;
Figure 7 is a flow diagram showing further aspects of the real time tire pressure monitoring system shown in Figure 4;
Figure 8 is a schematic representation showing further aspects of the real time tire pressure monitoring system shown in Figure 7; and
Figure 9 is a graphical representation showing further aspects of the real time tire pressure monitoring system shown in Figure 7.

Similar numerals refer to similar parts throughout the drawings.

### Definitions

"Axial" and "axially" means lines or directions that are parallel to the axis of rotation of the tire.

"CAN bus" or "CAN bus system" is an abbreviation for controller area network system, which is a vehicle bus standard designed to allow microcontrollers and devices to communicate with each other within a vehicle, enabling communication between specific vehicle sensing and/or control systems.

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Inner liner" means the layer or layers of elastomer or other material that form the inside surface of a tubeless tire and that contain the inflating fluid within the tire.

"Lateral" means an axial direction.

"Radial" and "radially" means directions radially toward or away from the axis of rotation of the tire.

"Tread element" or "traction element" means a rib or a block element defined by a shape having adjacent grooves.

### Detailed Description of Preferred Embodiments of the Invention

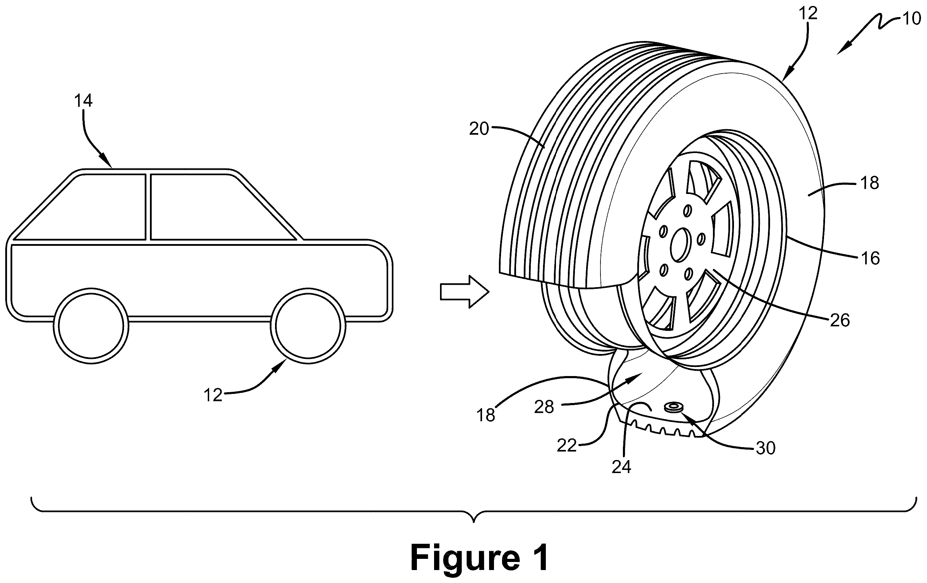

Turning now to Figures 1 through 9, an exemplary embodiment of the real time tire pressure monitoring system 10 of the present invention is presented. With particular reference to Figure 1, the system 10 monitors the pressure in each tire 12 supporting a vehicle 14. While the vehicle 14 is depicted as a passenger car, the invention is not to be so restricted. The principles of the invention find application in other vehicle categories such as commercial trucks, off-the-road vehicles, and the like, in which vehicles may be supported by more or fewer tires 12. In addition, the invention finds application in a single vehicle 14 or in fleets of vehicles.

Each tire 12 includes a pair of bead areas 16 (only one shown) and a bead core (not shown) embedded in each bead area. Each one of a pair of sidewalls 18 extends radially outward from a respective bead area 16 to a ground-contacting tread 20. The tire 12 is reinforced by a carcass 22 that toroidally extends from one bead area 16 to the other bead area, as known to those skilled in the art. An innerliner 24 is formed on the inside surface of the carcass 22. The tire 12 is mounted on a wheel 26 in a manner known to those skilled in the art and, when mounted, forms an internal cavity 28 that is filled with a pressurized fluid, such as air.

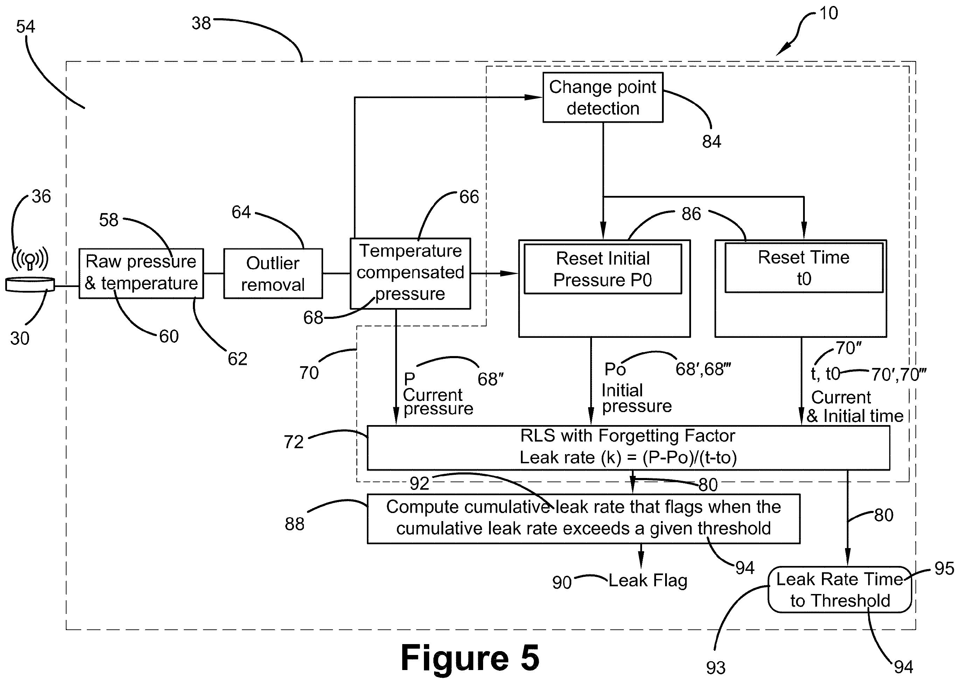

A sensor unit 30 may be attached to the innerliner 24 of each tire 12 by means such as an adhesive for the purpose of detecting certain real-time tire parameters inside the tire, such as tire pressure 58 and temperature 60 (Figure 5). It is to be understood that the sensor unit 30 may be attached in such a manner, or to other components of the tire 12, such as between layers of the carcass 22, on or in one of the sidewalls 18, on or in the tread 20, and/or a combination thereof. For the purpose of convenience, reference herein shall be made to mounting of the sensor unit 30 on the tire 12, with the understanding that mounting includes all such attachment.

Preferably the sensor unit 30 is a tire pressure monitoring system (TPMS) sensor, of a type that is commercially available, and may be of any known configuration. For the purpose of convenience, the sensor unit 30 shall be referred to as a TPMS sensor. Each TPMS sensor 30 preferably also includes electronic memory capacity for storing identification (ID) information for each tire 12, known as tire ID information. Alternatively, tire ID information may be included in another sensor unit, or in a separate tire ID storage medium, such as a tire ID tag. The tire ID information may include manufacturing information for the tire 12, a service history of the tire, specific features and parameters of the tire, and/or mechanical characteristics of the tire.

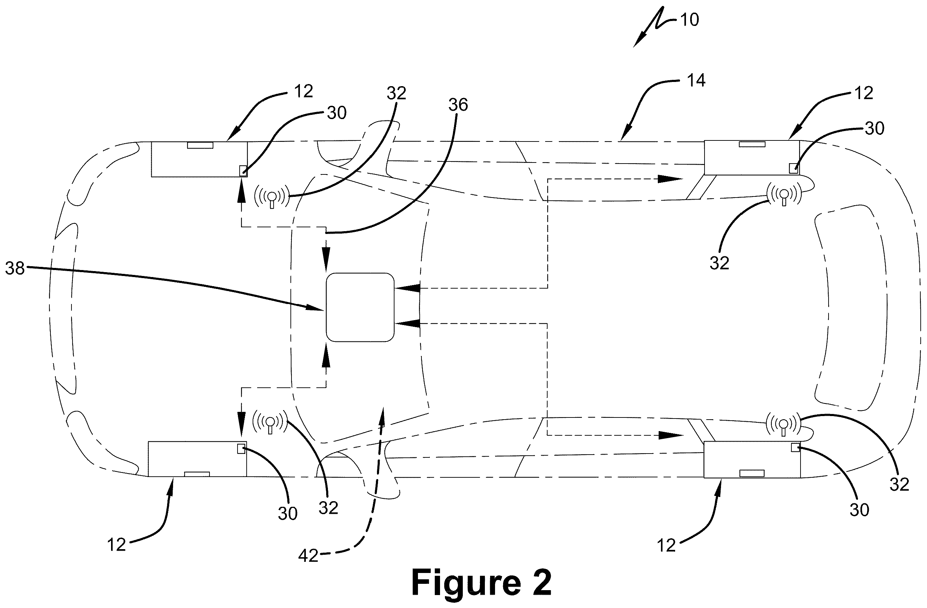

Turning now to Figure 2, each TMPS sensor 30 preferably includes a respective antenna 32 for wireless transmission 36 of the measured tire pressure 58 and temperature 60, as well as tire ID data, to a processor 38. The processor 38 may be mounted on the vehicle 14 as shown, or may be integrated into the TPMS sensor 30. For the purpose of convenience, the processor 38 will be described as being mounted on the vehicle 14, with the understanding that the processor may alternatively be integrated into the TPMS sensor 30. Preferably, the processor 38 is in electronic communication with or integrated into an electronic system of the vehicle 14, such as the vehicle CAN bus system 42, which is referred to as the CAN bus.

Aspects of the system 10 preferably are executed on the processor 38 or another processor that is accessible through the vehicle CAN bus 42, which enables input of data from the TMPS sensor 30, as well as input of data from other sensors that are in electronic communication with the CAN bus. In this manner, the tire pressure monitoring system 10 enables direct measurement of tire pressure 58 and temperature 60 with the TPMS sensor 30, and transmission of the measurement data to the processor 38. Tire ID information preferably is also transmitted from the TPMS sensor 30 to the processor 38. The processor 38 preferably correlates the measured tire pressure 58, the measured tire temperature 60, the measurement time, and ID information for each tire 12.

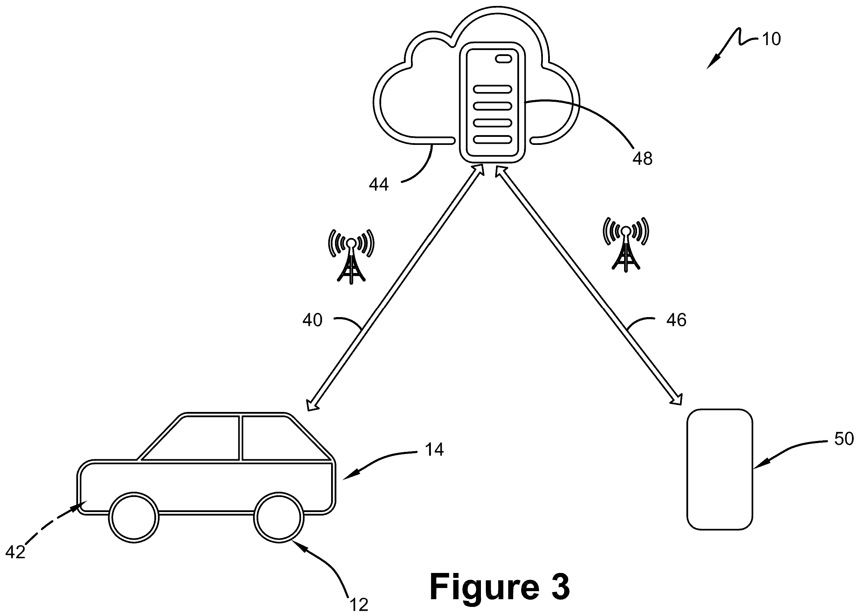

Referring to Figure 3, when the measured tire pressure 58, measured tire temperature 60, measurement time and ID information are correlated for each tire 12, the data may be wirelessly transmitted 40 from the processor 38 (Figure 2) and/or the CAN-bus 42 on the vehicle 14 to a remote processor 48, such as a processor in a cloud-based server 44. The cloud-based server 44 may execute aspects of the real time tire pressure monitoring system 10. Output from the system 10 may be wirelessly transmitted 46 to a display device 50 that is accessible to an operator of the vehicle 14 or to a fleet manager.

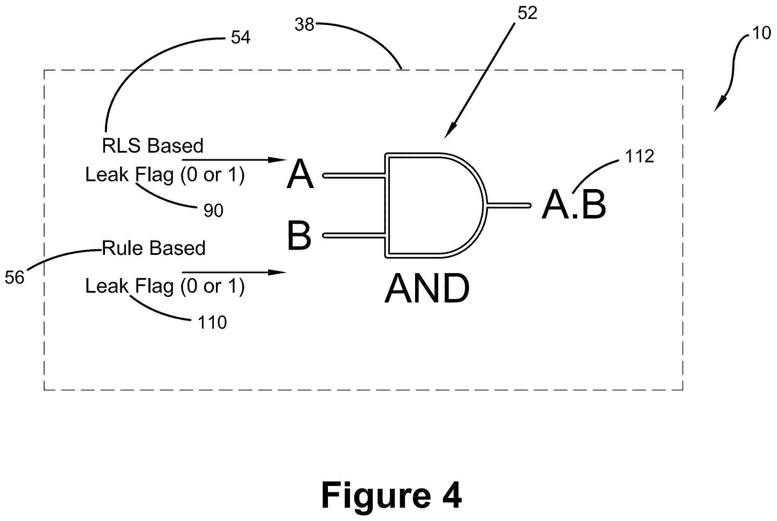

Turning to Figure 4, the real time tire pressure monitoring system 10 includes a fusion module 52 that is in electronic communication with and is executed on the processor 38. The fusion module 52 fuses the output of two different leak rate determination methods to ensure robust and redundant pressure leak detection in each tire 12. Specifically, the fusion module includes a filter module 54, which analyzes data from each TPMS sensor 30, and a comparative module 56, which compares data between multiple tire sensors, as will be described in greater detail below.

With reference to Figure 5, the filter module 54 is in electronic communication with and is executed on the processor 38. The filter module 54 receives the measured pressure 58, which is also referred to as the raw pressure measurement, and the measured temperature 60, which is also referred to as the raw temperature measurement, for the tire 12 from the TPMS sensor 30. As mentioned above, the processor 38 preferably correlates the measured tire pressure 58, the measured tire temperature 60, and the measurement time, which may be performed in a correlator 62.

An outlier filter 64 reviews the pressure measurements 58 and the temperature measurements 60 for values that are outside of a predetermined range, and thus are excessively high or low, and removes them. In this manner, the outlier filter 64 removes measured data that may not be accurate due to an anomaly, with such removal improving the accuracy of the system 10.

Once outlier data is removed, the measured pressure 58 preferably is corrected or compensated for the impact of temperature in a compensation module 66. The compensation module 66 may employ any technique for compensation of pressure due to temperature that is known to those skilled in the art, and generates a temperature-compensated pressure 68. For example, the ideal gas law may be employed to calculate the temperature-compensated pressure 68, as the volume of the tire cavity 28 is known, the measured pressure 58 is known, and the measured temperature 60 is known.

The temperature-compensated pressure 68 is communicated to a leak rate determination module 70. The leak rate determination module 70 preferably employs a recursive least squares adaptive filter algorithm 72, which minimizes a function by selecting filter coefficients and updating the filter with new data.

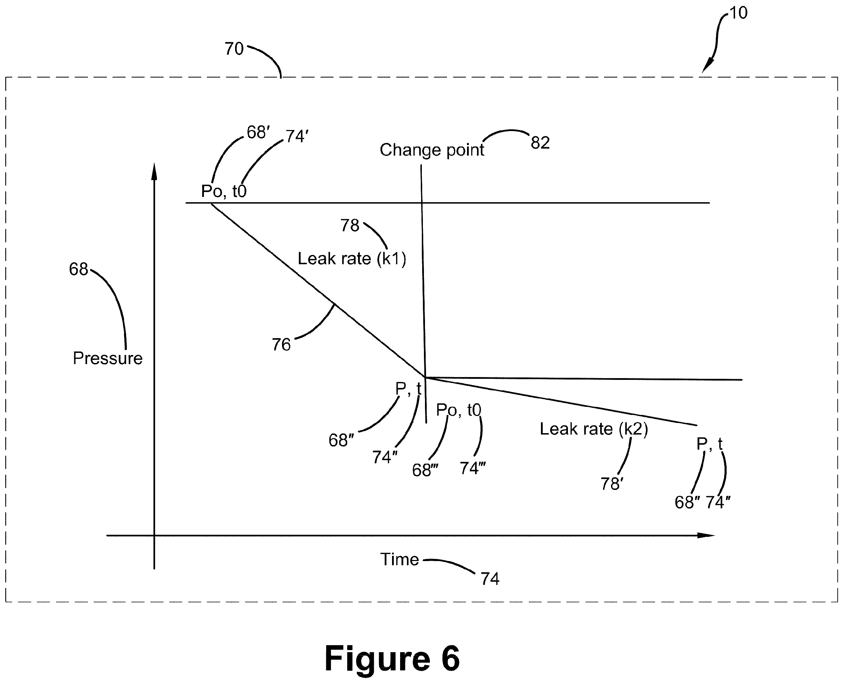

With additional reference to Figure 6, in the leak rate determination module 70, temperature compensated pressure measurements 68 are plotted against their corresponding times 74 of measurement. A first temperature compensated pressure measurement 68' is plotted at a corresponding first measurement time 74', and subsequent temperature compensated pressure measurements 68" are plotted against corresponding measurement times 74", generating a linear relationship that is expressed as a line 76. A slope 78 of the line 76 indicates a leak rate 80, which is a loss in pressure in the tire 12 over time. The slope 78 preferably is determined using the recursive least squares adaptive filter algorithm 72.

The recursive least squares adaptive filter algorithm 72 preferably is a lightweight recursive least squares formulation with minimal or no buffering, which provides for a lightweight implementation to reduce the computing resources that are needed. In addition, the recursive least squares adaptive filter algorithm 72 preferably employs a forgetting factor, which assigns less weight to older data samples to reduce the amount of data that is needed in the recursive least squares computation. These characteristics enable the recursive least squares adaptive filter algorithm 72 to have an enhanced response time with less computing resources.

As measurement of tire pressure 58 by the TPMS sensor 30 continues, the distribution of the time series of pressure measurements may change, which occurs at a change point 82. At the change point 82, the slope 78 of the line 76 changes, indicating a change in the leak rate 80. The temperature compensated pressure measurements 68 are monitored by a change point detector 84, which detects the change point 82 and adjusts the parameters for the recursive least squares adaptive filter algorithm 72. More particularly, when the change point detector 84 determines there is a change in the slope 78 of the line 76 and thus detects the change point 82, the change point detector causes the leak rate determination module 70 to reset 86 the first temperature compensated pressure measurement to a new first temperature compensated pressure measurement 68‴ at a corresponding new first measurement time 74"'. Subsequent temperature compensated pressure measurements 68" are plotted against corresponding measurement times 74". A new slope 78' of the line 76 is determined using the recursive least squares adaptive filter algorithm 72.

Alternatively, rather than employing the change point detector 84, the leak rate determination module 70 may reset 86 the first temperature compensated pressure measurement to a new first temperature compensated pressure measurement 68‴ at a corresponding new first measurement time 74‴ at regular time intervals. For example, a timer interval of ten (10) to fifteen (15) minutes of operation of the vehicle 14 may be employed. Subsequent temperature compensated pressure measurements 68" are plotted against corresponding measurement times 74", and a new slope 78' of the line 76 is determined using the recursive least squares adaptive filter algorithm 72.

Thus, for each slope 78, 78', the leak rate determination module 70 generates a corresponding leak rate 80. The leak rates 80 are input into an accumulator 88. The accumulator 88 aggregates the leak rates 80 and calculates a cumulative leak rate 92. The accumulator 88 also compares the cumulative leak rate 92 to a predetermined leak threshold 94, and when the cumulative leak rate exceeds the predetermined threshold, the filter module 54 generates a filter module flag 90.

The leak rates 80 are also input into a time estimator 93. The time estimator 93 determines a remaining time 95 until the leak threshold 94 is reached. More particularly, the current temperature-compensated pressure 68 is known, the current leak rate 80 is known, which is a loss of air pressure per unit time, and the leak threshold 94 is known, the time remaining 95 to reach the threshold may be determined. By employing leak rates 80 as they are generated by the determination module 70, the time estimator 93 may continue to update the determination of remaining time 95 to reach the threshold 94 as a real-time determination.

In this manner, the filter module 54 analyzes measured pressure data 58 from each TPMS sensor 30 to provide an effective technique for tracking the leak rate 80 of the tire 12 in real time. The recursive least squares adaptive filter algorithm 72 enables the filter module 54 to effectively detect and track changing leak rates 80. By calculating the cumulative leak rate 92 and setting the threshold 94, the filter module flag 90 stabilizes the leak detection of the system 10 and reduces noise-induced fluctuations in the measured pressure data 58. In addition, the filter module 54 enables a real-time determination of remaining time 95 until the leak threshold 94 is reached.

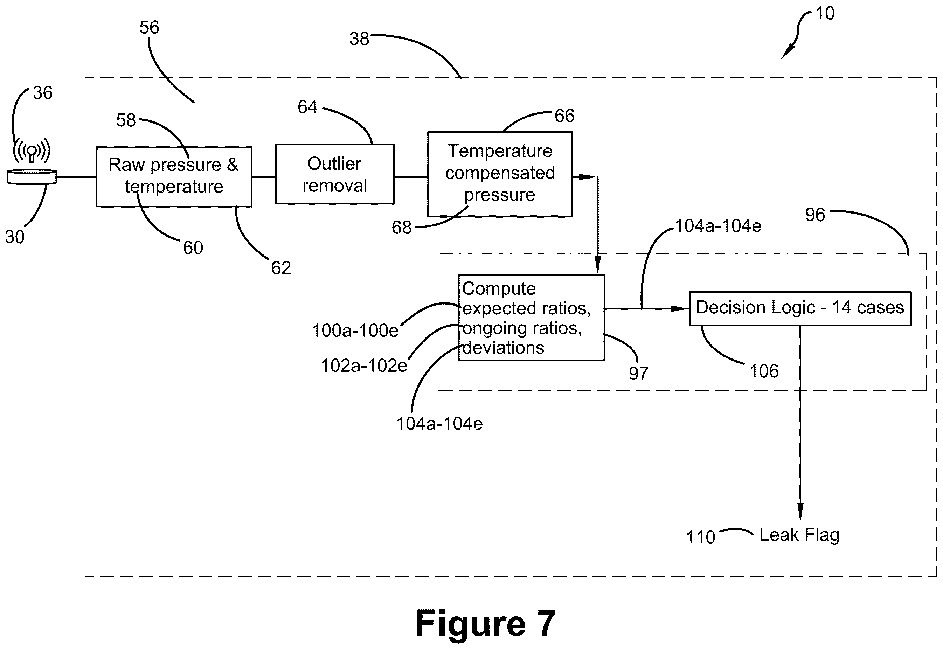

Turning now to Figure 7, the comparative module 56 is in electronic communication with and is executed on the processor 38. The comparative module 56 compares data between multiple TPMS sensors 30, employing a peer-based comparative analysis for leak monitoring. Like the filter module 54, the comparative module 56 receives the measured pressure or raw pressure measurement 58, and the measured temperature or raw temperature measurement 60, for the tire 12 from the TPMS sensor 30. The processor 38 preferably correlates the measured tire pressure 58, the measured tire temperature 60, and the measurement time, which may be performed in the correlator 62.

Also like the filter module 54, the outlier filter 64 reviews the pressure measurements 58 and the temperature measurements 60 for values that are outside of a predetermined range, and thus are excessively high or low, and removes them. The outlier filter 64 thus removes data that may not be accurate due to an anomaly to improve the accuracy of the system 10.

Again like the filter module 54, once outlier data is removed, the measured pressure 58 preferably is corrected or compensated for the impact of temperature in the compensation module 66. The compensation module 66 may employ any technique for compensation of pressure due to temperature that is known to those skilled in the art to generate the temperature-compensated pressure 68.

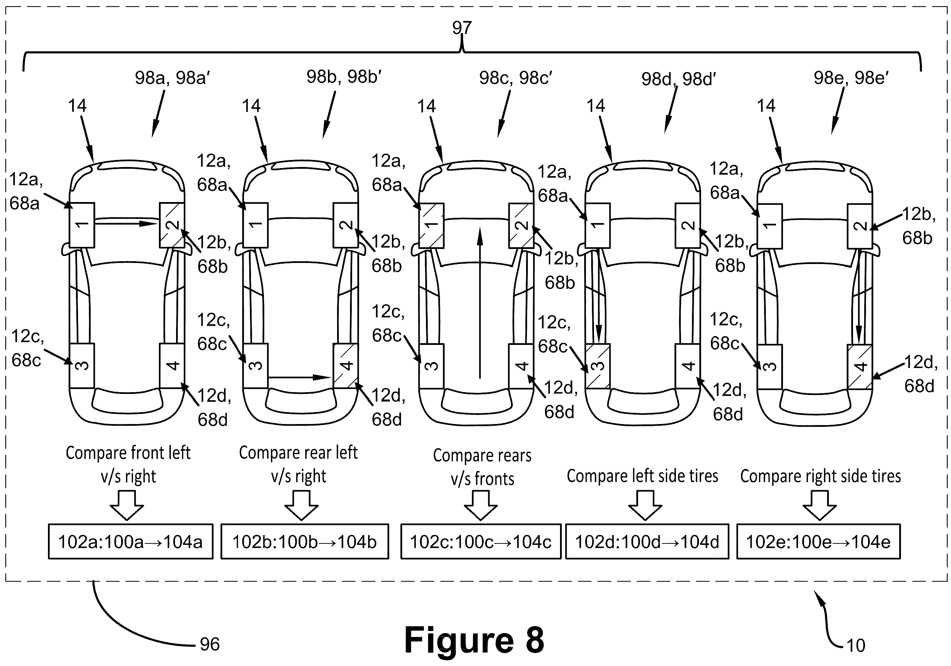

The temperature-compensated pressure 68 is communicated to a peer comparator 96. With additional reference to Figure 8, the peer comparator 96 analyzes the temperature-compensated pressure 68 for each respective tire 12. More particularly, by way of example, the tires 12 may include a front left tire 12a, a front right tire 12b, a rear left tire 12c and a rear right tire 12d. As described above, the processor 38 preferably correlates the measured tire pressure 58, the measured tire temperature 60, the measurement time, and ID information for each tire 12. From this correlation, a front left temperature compensated pressure 68a corresponds to the front left tire 12a, a front right temperature compensated pressure 68b corresponds to the front right tire 12b, a rear left temperature compensated pressure 68c corresponds to the rear left tire 12c, and a rear right temperature compensated pressure 68d corresponds to the rear right tire 12d.

The peer comparator 96 includes a comparator module 97 that performs a series of comparisons of tire pressures to generate baseline or expected pressure ratios. More particularly, an initial first comparison 98a of an initial front left temperature compensated pressure 68a to an initial front right temperature compensated pressure 68b establishes an initial expected ratio 100a for the first comparison. An initial second comparison 98b of an initial left rear temperature compensated pressure 68c to an initial rear right temperature compensated pressure 68d establishes an initial expected ratio 100b for the second comparison. An initial third comparison 98c of the initial rear temperature compensated pressures 68c and 68d to the initial front temperature compensated pressures 68a and 68b establishes an initial expected ratio 100c for the third comparison. An initial fourth comparison 98d of the initial front left temperature compensated pressure 68a to the initial rear left temperature compensated pressure 68c establishes an initial expected ratio 100d for the fourth comparison. An initial fifth comparison 98e of an initial front right temperature compensated pressure 68b to the initial rear right temperature compensated pressure 68d establishes an initial expected ratio 100e for the fifth comparison.

After the expected ratios 100a-100e are established, subsequent temperature compensated pressure measurements 68 are employed by the comparator module 97 to perform ongoing comparisons 98a'-98e' to establish respective ongoing ratios 102a-102e. The comparator module 97 then compares each respective ongoing ratio to the corresponding initial ratio to determine a deviation.

For example, the ongoing ratio 102a is compared to the initial expected ratio 100a in the first comparison 98a, 98a' to yield a deviation 104a for the first comparison. Likewise, the ongoing ratio 102b is compared to the initial expected ratio 100b in the second comparison 98b, 98b' to yield a deviation 104b for the second comparison, and the ongoing ratio 102c is compared to the initial expected ratio 100c in the third comparison 98c, 98c' to yield a deviation 104c for the third comparison. The ongoing ratio 102d is compared to the initial expected ratio 100d in the fourth comparison 98d, 98d' to yield a deviation 104d for the fourth comparison, and the ongoing ratio 102e is compared to the initial expected ratio 100e in the fifth comparison 98e, 98e' to yield a deviation 104e for the fifth comparison.

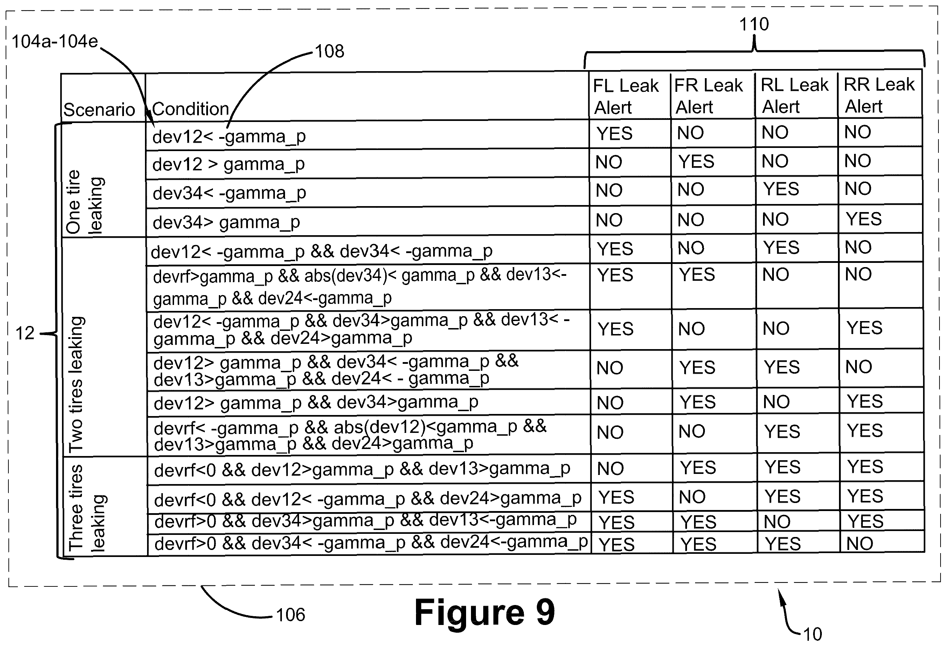

Returning to Figure 7, the deviations 104a-104e are sent from the comparator module 97 to a rule decision module 106 of the peer comparator 96. With additional reference to Figure 9, the rule decision module 106 compares each deviation 104a-104e to a predetermined deviation threshold 108 or gamma p (γp). When a deviation 104a-104e exceeds the predetermined deviation threshold 108, the comparative module 56 generates a comparative module flag 110. In this manner, the rule decision module 106 employs rule-based comparisons to detect pressure leaks on each of one or more tires 12. The comparative module 56 thus enables detection of a leak in multiple tires 12, with a specific identification of each tire, in real time and at the same time.

Returning to Figure 4, the filter module 54 of the fusion module 52 thus analyzes data from each TPMS sensor 30 to generate a filter module flag 90. The comparative module 56 of the fusion module 52 compares data between multiple tire sensors 30 to generate a comparative module flag 110. The fusion module 52 fuses or combines the results of the filter module 54 and the comparative module 56. More particularly, the fusion module 52 receives the filter module flag 90 and the comparative module flag 110. When both the filter module flag 90 and the comparative module flag 110 indicate a tire pressure leak, the fusion module 52 generates a system notification 112. By fusing or combining the results of the filter module 54 and the comparative module 56, the system notification 112 is generated only when both modules indicate a leak. In this manner, the real time tire pressure monitoring system 10 ensures robust tire leak detection while minimizing false alarms or false positive alerts.

Returning to Figure 3, when the system notification 112 and/or the determination of remaining time 95 to reach the threshold 94 is generated by the real time tire pressure monitoring system 10, the notification and/or determination may be transmitted from the processor 38 through the vehicle CAN bus system 42 to an electronic control system of the vehicle. The notification 112 and/or determination of remaining time 95 may then be employed to actuate and thus improve the function of a vehicle control system, such as an anti-lock brake system (ABS), electronic stability control system (ECS), and the like. The notification 112 and/or determination of remaining time 95 may also be wirelessly transmitted to the display device 50 that is accessible to an operator of the vehicle 14 or to a fleet manager. The operator may actuate the vehicle 14 to take appropriate action in response to the notification 112 and/or determination of remaining time 95. The fleet manager may schedule an action or instruct the vehicle operator to actuate the vehicle 14 to take appropriate action in response to the notification 112 and/or determination of remaining time 95.

In this manner, the real time tire pressure monitoring system 10 of the present invention operates in real time to determine a leak rate of at least one tire 12. The filter module 54 of the real time tire pressure monitoring system 10 generates a filter module flag 90 when the cumulative leak rate exceeds the predetermined threshold 94 an enables a real-time determination of remaining time 95 until the threshold is reached. The comparative module 56 of the real time tire pressure monitoring system 10 compares pressures between different tires 12 on the vehicle 14 and generates a comparative module flag 110 when the predefined deviation threshold 108 is exceeded, and provides detection of a leak in multiple tires in real time. The fusion module 52 of the real time tire pressure monitoring system 10 fuses or combines the results of the filter module 54 and the comparative module 56 to ensure robust tire leak detection while minimizing false alarms or false positive alerts. In addition, the use of the fusion module 52 to combine the results of the distinct filter module 54 and the comparative module 56 enables the real time tire pressure monitoring system 10 to operate efficiently with low memory and computational requirements.

The present invention also includes a method of monitoring tire pressure. The method includes steps in accordance with the description that is presented above and shown in Figures 1 through 9.

It is to be understood that the structure of the above-described real time tire pressure monitoring system may be altered or rearranged, or components or steps known to those skilled in the art omitted or added, without affecting the overall concept or operation of the invention.

## Claims

1. A real time tire pressure monitoring system for monitoring the pressure in a tire supporting a vehicle, the system comprising:
a first sensor mounted on a first tire for measuring a pressure of the first tire;
a second sensor mounted on a second tire for measuring a pressure of the second tire;
means for transmitting the measured pressure data from the first sensor and the second sensor to a processor;
a fusion module configured for being executed on the processor, the fusion module including:
(a) a filter module configured for receiving the measured pressure for the first tire from the first sensor, the filter module including:
(i) a filter algorithm configured to determine a leak rate of the first tire; and
(ii) a filter module flag configured to be generated when the determined leak rate of the first tire falls below a predetermined leak threshold;
and
(b) a comparative module configured to receive the measured pressure for the first tire from the first sensor and the measured pressure for the second tire from the second sensor, the comparative module including:
(i) a peer comparator configured to compare the measured pressure for the first tire from the first sensor and the measured pressure for the second tire from the second sensor and to determine a deviation; and
(ii) a comparative module flag configured to be generated when the deviation exceeds a predetermined deviation threshold;
wherein the fusion module is configured to receive the filter module flag and the comparative module flag;
wherein the system is further configured to generate a system notification by the fusion module when both the filter module flag and the comparative module flag indicate a pressure leak; and
wherein the system is configured to transmit the system notification to at least one of a vehicle control system and a display device for actuation of the vehicle in response to the system notification.

2. The real time tire pressure monitoring system of claim 1, wherein the first sensor mounted on the first tire is configured to measure a temperature of the first tire.

3. The real time tire pressure monitoring system of claim 1 or 2, further comprising a correlator configured for being executed on the processor, the correlator being configured for receiving and correlating the measured pressure of the first tire, the measured temperature of the first tire and the measurement time.

4. The real time tire pressure monitoring system of at least one of the previous claims, further comprising an outlier filter configured for being executed on the processor, the outlier filter being configured for:
receiving the measured pressure of the first tire and the measured temperature of the first tire; and
removing pressure measurements and temperature measurements that are outside of a predetermined range.

5. The real time tire pressure monitoring system of at least one of the previous claims, further comprising a compensation module configured for being executed on the processor, the compensation module being configured for:
receiving the measured pressure of the first tire and the measured temperature of the first tire; and
generating a temperature-compensated pressure from the measured pressure of the first tire and the measured temperature of the first tire.

6. The real time tire pressure monitoring system of at least one of the previous claims, wherein the filter algorithm of the filter module is configured to employ a recursive least squares adaptive filter algorithm, the recursive least squares adaptive filter algorithm preferably including a lightweight recursive least squares formulation with no buffering and/or preferably employing a forgetting factor and/or preferably including a plot of temperature compensated pressure measurements against corresponding times of measurement to generate a linear relationship and a slope of a line from the linear relationship indicating the leak rate.

7. The real time tire pressure monitoring system of at least one of the previous claims, wherein the filter module (i) includes a change point detector to detect a change in the leak rate and, when the change occurs, wherein the filter module is configured to adjust parameters for the recursive least squares adaptive filter algorithm; and/or wherein the filter module (ii) is configured to reset parameters for the recursive least squares adaptive filter algorithm at regular time intervals.

8. The real time tire pressure monitoring system of at least one of the previous claims, wherein the filter module includes an accumulator, the accumulator being configured to:
receive a plurality of leak rates;
calculate a cumulative leak rate from the plurality of leak rates;
compare the cumulative leak rate to the predetermined leak threshold; and,
when the cumulative leak rate exceeds the predetermined threshold, to generate the filter module flag.

9. The real time tire pressure monitoring system of at least one of the previous claims, wherein the filter module includes a time estimator, the time estimator being configured to receive the leak rate and to determine a remaining time until the leak threshold is reached; and/or wherein the filter module is configured to generate a determination of remaining time to reach the leak threshold and the fusion module is configured to transmit the determination of remaining time to at least one of a vehicle control system and a display device for actuation of the vehicle in response to the determination of remaining time.

10. The real time tire pressure monitoring system of at least one of the previous claims, wherein the peer comparator of the comparative module is configured to compare a temperature-compensated pressure for the first tire and a temperature-compensated pressure for the second tire, and, optionally, wherein the peer comparator of the comparative module is configured to perform an initial comparison of the temperature-compensated pressure for the first tire and the temperature-compensated pressure for the second tire to generate an expected pressure ratio.

11. The real time tire pressure monitoring system of at least one of the previous claims, wherein the peer comparator of the comparative module is configured to perform a subsequent comparison of the temperature-compensated pressure for the first tire and the temperature-compensated pressure for the second tire to generate an ongoing pressure ratio; and/or wherein the peer comparator of the comparative module is configured to compare the ongoing pressure ratio to the expected pressure ratio to determine the deviation.

12. The real time tire pressure monitoring system of at least one of the previous claims, wherein the peer comparator of the comparative module includes a rule decision module configured to receive a plurality of deviations, and, when at least one of the plurality of deviations exceeds the predetermined deviation threshold, wherein the comparative module is configured to generate the comparative module flag.

13. The real time tire pressure monitoring system of at least one of the previous claims, wherein the pressure leak includes a pressure leak in the first tire and a pressure leak in the second tire.

14. A real time tire pressure monitoring method for monitoring the pressure in a tire supporting a vehicle, the method comprising:
providing a first sensor mounted on a first tire measuring a pressure of the first tire;
providing a second sensor mounted on a second tire measuring a pressure of the second tire;
providing means transmitting the measured pressure data from the first sensor and the second sensor to a processor;
providing a fusion module executed on the processor, the fusion module including:
(a) a filter module receiving the measured pressure for the first tire from the first sensor, the filter module including:
(i) a filter algorithm determining a leak rate of the first tire; and
(ii) a filter module flag being generated when the determined leak rate of the first tire falls below a predetermined leak threshold;
and
(b) a comparative module receiving the measured pressure for the first tire from the first sensor and the measured pressure for the second tire from the second sensor, the comparative module including:
(i) a peer comparator comparing the measured pressure for the first tire from the first sensor and the measured pressure for the second tire from the second sensor and determining a deviation; and
(ii) a comparative module flag being generated when the deviation exceeds a predetermined deviation threshold;
wherein the fusion module receives the filter module flag and the comparative module flag;
wherein the system generates a system notification by the fusion module when both the filter module flag and the comparative module flag indicate a pressure leak; and
wherein the system transmits the system notification to at least one of a vehicle control system and a display device for actuation of the vehicle in response to the system notification.

15. The method of claim 14, wherein the method is executed by operating a system in accordance with at least one of the claims 1 to 13.
